# EUROPEAN PATENT APPLICATION

(11) **EP 1 577 861 A2**
(43) Date of publication of application: **21.09.2005**
(21) Application number: 05251651.5
(22) Date of filing: 18.03.2005
(51) Int. Cl.: G09F 3/10

(54) **Insulated label and method of manufacture**

(30) Priority: 19.03.2004 US 554537 P; 27.10.2004 US 974385
(71) Applicant: PepsiCo, Inc., New York 10577 (US)
(72) Inventor: Farha, Said, Pleasantville, NY 10570 (US)
(74) Representative: Garratt, Peter Douglas

(57) **Abstract**

The invention is an insulated label for maintaining the temperature of the contents of a package, formed from a polymeric thermoplastic closed cell foam having from about 5,000 to about 250,000 dosed calls per cubic inch.

## Description

### 1. Field of the invention

The present invention is directed in one aspect to insulated labels for packages. In particular examples, the present invention is directed to insulated labels that decrease the rate of warming or cooling of the contents of a package that has a temperature less than or greater than ambient.

### 2. Discussion of Related Art

Soft drinks consumed by the public are served chilled in a variety of packaging materials of choice for a majority of beverage applications. The chilled nature of the beverage is important to the quality of the beverage and the ultimate consumer experience. As chilled beverage packages are removed from the icebox or a refrigerator, and exposed to warmer temperatures in the process of consumption, the package and, hence, the beverage tends to absorb heat, resulting in an increase in temperature, which can reduce the quality of the taste of the beverage, possibly resulting in a negative consumer experience. Additionally, in the case of carbonated beverages, the beverage will go "flat" due to an increased loss in the carbon dioxide from the beverage once an opened package is exposed to the warmer temperatures. Similarly, certain foods and beverages are preferably served at a temperature warmer than ambient, and undergo an unacceptable cooling when exposed to a sufficiently low temperature.

U.S. Patent Application Publication Nos. 2003/0003249 and 2003/0207059 A1 to Benim et al. disclose insulating label stocks that include a thermal insulating layer, which may be a fiber-fill batt, and is laminated to at least one layer of film, paper or fabric. The applications disclose that the label stock can be wrapped around a container, such as a can, bottle or pouch, and may be coated with a coating material, so that it is printable, thereby imparting both insulating properties and print capability to a container. The disclosed label insulators have sufficient loft, typically greater than 0.0075 inch, to provide insulation for the container, but is reportedly thin enough to be easily wrapped around a container for use as label stock, providing a label that maintains the temperature of the contents of the container longer than the use of a standard label alone. The disclosed thermal Insulating layer comprises an organic thermoplastic polyester, polyethylene or polypropylene fiber-based material, such as polyester fiber-fill batt. A fiber-fill batt sold as THERMOLITE® Active Original by E.I. du Pont de Nemours and Company is reportedly especially suitable. The disclosed fiber-fill batt has an areal weight in the range of 10 gm/m² to 200 gm/m², and a bulk density of less than 0.3 gm/cm³. Alternatively, the thermal insulating layer is formed from melt blown fibers, such as melt blown polyolefins, sold as THINSULATE® by 3M.

Materials disclosed for use as the thermal insulating layer are polyurethane foams and other foam compositions known in the art, but not specifically disclosed, an inorganic thermoplastic fiber-based material comprising glass wool, borosilicate glass, or rock wool, knit fabrics made from a tetra-channel or scalloped oval fiber, sold under the trademark COOLMAX® by E.I. du Pont de Nemours and Company of Wilmington, Delaware, woven or fleece material, and non-woven materials, such as felt, or high-loft non-woven or needled non-woven fabrics. However, based on the disclosure of the patent, it is not believed that the label disclosed in the Benim applications provide the desired degree of insulation.

U.S. Patent No. 6,820,281 to Sommers discloses an insulating label and wrap for beverage containers of various shapes, manufactured by a continuous run process using a plurality of printing stations to provide a high quality printed image on the face of the label. The disclosed label or after-market beverage container wrap produced by this process comprises a multi-layered label having a layer of ink on the face of a paper stock substrate, and adhesive layer on the back side of the stock substrate holds a thin waterproof layer of foam. The printed face of the label is protected by a dear film or coating covering the ink layer. The label can be manufactured as an after-market wrap to be applied by hand by the customer and fits containers of various sizes, or as a label that is an integral part of the container as it comes from the manufacturer. As with the Benim applications, based on the disclosure of the Sommers patent, it is not believed that the label disclosed in the patent provides the desired degree of insulation.

U.S. Patent No. 8,235,380 discloses a multi-layered article comprising a closed-cell microcellular material, having an average cell size of less than about 80 microns and a void fraction of at least 90 percent, and a paper-based sheet material adhered directly to the microcellular material. Such a foam would have on the order of 1,000,000 cells per cubic centimeter.

U.S. Patent No. 5,085,906 to Ast et al. discloses a polypropylene container and an adhesive label for applying to such a container. The adhesive label comprises a base layer, which includes on its underside an adhesive layer and on its upper side an imprint, and a film adhered to the upper side of the base layer by means of a laminating adhesive. The base layer comprises a foamed polypropylene core layer and a pair of oriented polypropylene layers, where the foamed polypropylene layer is covered on both sides with the polypropylene layers, and the film consists essentially of polypropylene. There is no disclosure regarding the specific foamed polypropylene or how it is produced.

Hence, a need exists for methods and means of maintaining the temperature of packages and their contents upon exposure to a higher or lower ambient temperature for a period of time sufficient to allow consumption of the contents at the desired temperature. The present invention provides in one aspect an insulated label that provides such means and methods.

The present invention is directed to an insulated label for maintaining the temperature of the contents of a package. The Insulated label comprises a polymeric thermoplastic closed cell foam, preferably a polypropylene microfoam, typically having from about 5,000 to about 250,000 closed cells per cubic inch. Preferably, the foam is a solution process polymeric closed cell microfoam, most preferably formed from polypropylene. Moreover, the foam preferably has from about 25,000 to about 100,000 closed cells per cubic inch (in³), more preferably, from about 25,000 to about 75,000 closed cells per in³, and, most preferably, from about 40,000 to about 60,000 closed cells per in³. A foam useful in the invention preferably has a thickness of at least about 0.25 mm, and, more preferably, from about 1 to about 4 mm. Indicia may be printed directly on the microfoam, or a printable layer may be affixed to the outer surface of the microfoam, either directly or with an adhesive. Typically, the other surface of the microfoam of the label is affixed to the container, preferably with an adhesive layer, and, in contrast to the foam labels disclosed in U.S. Patent No. 5,085,906 to Ast et al., does not comprise a film layer.

The present invention is further directed to an insulated container, comprising the insulated label of the invention, and to a method of making an insulated package, where the method comprises obtaining a label according to the invention, and affixing the label onto a package or container.
The present invention will now be described by way of examples with reference to the accompanying drawing in which:

FIG. 1 illustrates an insulated label of the invention; and

FIG. 2 illustrates a container having an insulated label of the Invention.

The present invention relates to an insulated label that, when applied to a package or container, insulates the package or container, reducing the rate of temperature change In the contents of the package or container when exposed to a temperature warmer or colder than that of the contents. In contrast to conventional labels that are based on sheet materials, such as non-foamed polypropylene or paper, the label of the present invention is form from a polymeric thermoplastic closed cell foam, where the polymeric thermoplastic can be any polymeric material capable of being foamed into a flexible foam that can be used as a label, such as polyethylene and polypropylene, and is, preferably, a polypropylene microfoam. Polymeric thermoplastic closed cell foams useful In the invention generally have at least about 5,000 dosed cells per cubic inch (in³), about 305 closed cells per cubic centimeter (cm³), and less than about 250,000 closed cells per in³, from about 305 to about 6,100 closed cells per cm³, more preferably, from about 25,000 to about 75,000 closed cells per in³, from about 1,525 to about 4,575 closed cells per cm³, and, most preferably, from about 40,000 to about 60,000 dosed cells per in³, from about 2,440 to about 3,660 closed cells per cm³. Preferably, the foam has a thickness of at least about 0.25 mm (about 0.01 inch), more preferably, from about 1 to about 4 mm (about 0.04 to about 0.16 inch).

The foam is preferably a polypropylene microfoam formed in a flash solution process, such as that disclosed in U.S. Patent Nos. 3,584,090, 3,637,458, and 3,787,543 to Parrish, the contents of which are incorporated herein in their entirety by reference. The process essentially comprises preparing a solution of a film forming polymer in an organic solvent having a boiling point significantly lower than the melting point of the polymer. The solution is extruded, and a closed cell microfoam of the polymer is produced as the pressure on the solution is rapidly reduced as the solution exits the extruder. The solvent flashes into a gas, and the polymer foams and solidifies.

A polypropylene microfoam insulation material useful in the invention is MICROFOAM®, available commercially from Pactiv Corporation, Lake Forest. Illinois. MICROFOAM® is a foam having approximately 50,000 closed cells per in³, about 3,050 closed cells per cm³, and is available in several thicknesses, including 1/32 inch, 0.03125 inch (about 0.8 mm), 1/16 inch, 0.0625 inch (about 1.5 mm), and 1/8 inch, 0.125 inch (3.175 mm). Such a polypropylene microfoam, as with other foams useful in labels in accordance with the invention, can be used alone or in combination, such as by lamination and coextrusion, with conventional label materials to form a label. As foams, such as MICROFOAM®, are effective insulators, packages having a foam label in accordance with the invention stay colder or warmer for longer periods of time than do packages having prior art labels. Moreover, the preferred polypropylene microfoam materials have a lower density and, thus, weight than polyethylene or PET foams, and are more flexible, facilitating handling and application. The preferred polypropylene base allows the material to readily accept labels and tape for laminated structures and enables the adhesives to stick better.

Polymeric thermoplastic closed cell foams useful in the invention may also be blown with physical gaseous foaming and blowing agents, i.e., gases or low boiling point liquids, or by decomposing chemical foaming and blowing agents. The physical foaming agents include, but are not limited to, inert gases, such as nitrogen and carbon dioxide, hydrocarbons containing 3 to 5 carbon atoms, such as the isomers of the aliphatic hydrocarbons propane, butane, and pentane, and chlorinated hydrocarbons, such as methylene chloride, and the recently mandated "ozone-safe" replacements for banned chlorofluorocarbons, such as trichlorofluoromethane and - dichlorodifluoromethane. Physical blowing agents are typically dissolved or dispersed in a liquefied plastic or melt polymer under pressure, either rapidly expanding or flashing into the gaseous state and rapidly expanding as the pressure is released, thereby forming the cellular structure In the polymer, which rapidly cools and solidifies as the desired foam.

In contrast, chemical blowing agents decompose at elevated temperatures releasing an inert gas. Chemical blowing agents may be conventional diazo blowing agents, which, on decomposition, yield nitrogen. Chemical blowing agents useful in forming foams useful in the invention include, but are not limited to, organic and inorganic bicarbonates and oxylates, azo-chemicals, hydroxides, and amine nitrates. The chemical blowing agent is typically mixed with the thermoplastic materials in a process known in the art, such as mixing the chemical blowing agents with pellets or powders of the thermoplastic polymeric material, and introducing the blended material into an extruder Inlet The gas released when the blowing agent decomposes as a result of the heat in the extruder then forms the cellular structure in the resulting foam in the manner described above for physical blowing agents.

Other materials useful for the labels of the invention include, but are not limited to, foams of the type described above that are co-extruded with thermoplastic polymeric films that comprise a layer of the foam and a layer of the polymeric film material onto which indicia may be printed. Such co-extrusion and methods are known in the art.

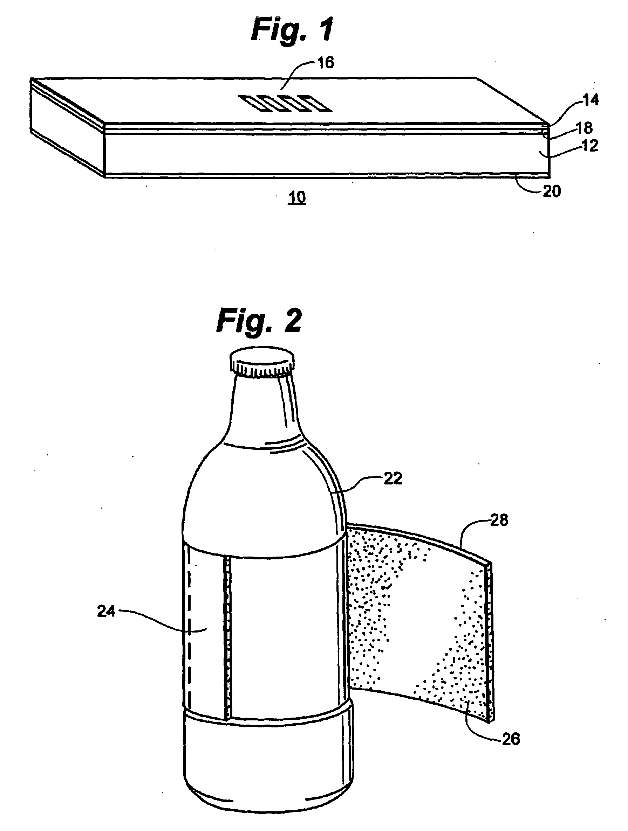

As discussed above, indicia, such as trademarks, text, and designs, may be printed directly onto the surface of the foam to provide a label, or a printed film, preferably a polyolefin, such as polypropylene, may be affixed to the surface of the foam to form the printed portion of the label. The film may be affixed directly to the foam by, for example, extrusion, or an adhesive may be used to affix the film and foam together. A layer of adhesive is also typically used to affix the insulating label of the invention to a container, such as a can, jar, or bottle. An insulated label 10 in accordance with the invention is illustrated in FIG. 1. As illustrated, the insulated label 10 has a layer of foamed polypropylene 12 of the type described above, and an outer film 14 of polypropylene on which indicia 16 may be printed. The outer film 14 is optionally affixed to the foam layer 12 by a layer of adhesive 18, and a layer of adhesive 20 is provided to affix the label 10 to a container.

A bottle 22 having a label 24 in accordance with the invention is illustrated in FIG. 2. As illustrated, the label 24 comprises a foam layer 26 and an outer film layer 28. As will be recognized by those of ordinary skill in the art, indicia may be printed on the outer surface of the film layer 28, or the outer film layer 28 may be transparent, such that indicia printed on the surface of foam layer 26 are visible. Optionally, the outer film layer 28 may be affixed to the foam layer 26 by a layer of adhesive (not shown).

These and other aspects of the present invention may be more fully understood by reference to the following example. While the example is meant to be illustrative of insulating labels according to the present invention, the present Invention is not meant to be limited by the following example.

### Example

Insulating labels of the present invention were compared to those of a type similar to those disclosed in U.S. Patent Application Publication No. 2003/0207059 to Benim et al. (Benim). The sample bottles were 20-ounce, polyethylene terephthalate ("PET") carbonated soft drink bottles, each having either an insulated label in accordance with the invention or a prior art insulated label. Each sample bottle was filled with 20 ounces of water to the standard fill level of the bottle, and capped with a lined plastic closure that was pre-drilled with a 1/16 inch hole for the introduction of a temperature monitoring thermocouple.

The Insulated-label bottles, each containing 20 ounces of water, were prepared and stored in a temperature controlled chamber at 5° C for a minimum of 24 hours prior to the initiation of a given test sequence. An environmental chamber was set at a temperature of 45° C to provide the requisite ambient temperature condition.

The test sequence involved the placement of the 5 insulated label bottles, pre-chilled to 5° C, in the temperature controlled chamber in direct contact with a metal surface in the chamber. Immediately prior to transferring the samples from the 5° C chamber to the 45° C chamber, a temperature reading of the water in each bottle was digitally recorded from the thermocouple in each sample, and a timer was used to record the elapsed time for each subsequent temperature reading. The temperature of the liquid contents of each sample was recorded as a function of elapsed time for each sample.

The temperature versus elapsed time data for the contents of each bottle were recorded with the total elapsed time required for the contents of each bottle to reach 12.8° C, or 55° F. In addition, the temperature of the contents of the bottles having insulating labels of the invention was recorded when the contents of the bottles with the prior art label material reached 12.8° C.

The difference in time required for the contents of the prior art bottles and those of the bottles of the invention to reach 12.8° C is set forth in Table 1.

**TABLE 1**

| **TIME DIFFERENTIAL @ 12.8° C (55° F)** | | | |
|---|---|---|---|
| Sample No. | Ambient T °C | Label Type | Time to 12.8° C Minutes |
| 1-A | 45 | Control | 9 to 11 |
| 1-B | 45 | Invention | 25 to 26 |
| Δt | | | 14 to 17 |

The temperature difference between the bottles having the prior art labels and the bottles having labels of the Invention when the water in the prior art bottles reached 12.8° C was -3.4° C. That is, when the temperature of the water In the prior art bottles reached 12.8° C, the temperature in the bottles with the labels of the invention was only 9.4° C. Therefore, the improvement in insulation by the labels of the invention compared to those of the prior art is clear.

Although the invention has been disclosed in the context of certain embodiments and examples, it will be understood by those skilled in the art that the invention extends beyond the specifically disclosed embodiments to other alternative embodiments and/or uses and obvious modifications and equivalents thereof. Accordingly, the invention is not intended to be limited by the specific disclosures of preferred embodiments herein.

## Claims

1. An insulated label for maintaining the temperature of the contents of a package, the insulated label comprising:
a polymeric thermoplastic closed cell foam having first and second surfaces and from about 5,000 to about 250,000 closed cells per cubic inch.

2. The insulated label according to claim 1, wherein the polymeric foam is a polymeric microfoam formed from a solution flash extrusion process microfoam.

3. The insulated label according to claim 1, wherein the foam has from about 25,000 to about 100,000 closed cells per in³.

4. The insulated label according to claim 1, wherein the foam has from about 25,000 to about 75,000 closed cells per in³.

5. The insulated label according to claim 1, wherein the foam has from about 40,000 to about 60,000 closed cells per in³.

6. The insulated label according to claim 1, wherein the foam has a thickness of at least about 0.25 mm.

7. The insulated label according to claim 1, wherein the foam has a thickness of from about 1 to about 4 mm.

8. The insulated label according to claim 1, wherein the foam comprises extruded polypropylene, polyethylene, or mixtures thereof.

9. The insulated label according to claim 1, further comprising a printable film layer affixed to the first surface.

10. The insulated layer according to claim 9, further comprising a layer of adhesive between the foam and the film layer.

11. The insulated layer according to claim 9, further comprising a layer of adhesive on the second surface.

12. An insulated container, comprising the insulated label according to claim 1.

13. A method of making an insulated package or container, the method comprising obtaining a label according to claim 1, and
affixing the label onto a package or container.

14. A method of making an insulated package or container, the method comprising obtaining a label according to claim 9, and
affixing the label onto a package or container.
